# EUROPEAN PATENT SPECIFICATION

(11) **EP 1 661 766 B1**
(45) Date of publication and mention of the grant of the patent: **26.09.2007**
(21) Application number: 05025557.9
(22) Date of filing: 23.11.2005
(51) Int. Cl.: B60R 21/00

(54) **Airbag device**
Airbagvorrichtung
Dispositif d'airbag

(30) Priority: 26.11.2004 JP 2004341436
(43) Date of publication of application: 31.05.2006
(73) Proprietor: AUTOLIV DEVELOPMENT AB, 447 83 Vargarda (SE)
(72) Inventor: Korechika, Koji, Kohoku-ku Yokohama-shi Kanagawa 222-0033 (JP)
(74) Representative: Parry, Simon James

(56) References cited:
- US-A- 4 989 895
- US-A- 5 743 558
- US-A1- 2003 025 309
- US-B1- 6 357 791

## Description

### BACKGROUND OF THE INVENTION

### TECHNICAL FIELD

The present invention relates to an airbag device enabled to change the hardness of an airbag by controlling the internal pressure of the airbag.

### BACKGROUND ART

In case a constraining device such as an airbag or PRC is expanded with the gas pressure created by an inflator thereby to constrain a passenger or passenger waist, the gas internal pressure of the constraining device is preferably so controlled to the body or seated position of the passenger as not to exceed a predetermined pressure.

In the prior art, therefore, the internal pressure control of the airbag, the volume control of the airbag and so on by a two-stage inflator have been made by using a seat position sensor for the seated position of the passenger, a passenger weight sensor for the physical difference of the passenger, and an ECU (Electronic Control Unit) for processing the information acquired by those sensors.

In the airbag device enabled to change the hardness of the airbag, as disclosed in USP No. 5,234,229, the generic US Patent Laid-Open No. US2001/0045734A1 and US Patent Laid-Open No. US2003/0141706A1, there is known the type, in which vent holes or gas exhaust ports. are formed in the flange of the inflator and in which the gas flow rate is made variable by moving the flange of the inflator upward and downward.

### SUMMARY OF THE INVENTION

The present invention has been conceived in view of the problems of the aforementioned airbag device of the prior art, and has an object to provide an airbag device including a chamber disposed on the back of an inflator left as it is (i.e., on the opposite side of an airbag) and having vent holes.

For this object, according to the present invention, there is provided an airbag device comprising an inflator having gas blowout ports in a side wall, for controlling an airbag internal pressure being expanded with the gas generated from the inflator, by changing the flow rate of the gas to pass through vent holes, wherein the improvement comprises: a back chamber disposed on the back of the inflator; vent holes formed in the back chamber; and a gas flow rate changing device for changing the gas flow rate through the vent holes. Here, the back side of the inflator means the opposite side of the airbag.

Moreover, preferably, the back chamber includes : an inflator bracket fixed on the flange of the inflator for causing the gas generated from the gas blowout ports to flow around to the back side of the inflator; and a trunk having a flange portion fixed on the inflator bracket and having at least one gas exhaust port on its side wall, and the gas flow rate changing device includes: an annular bulge formed along the inner side wall of the trunk; a piston having its head pushed onto the annular bulge; and a spring inserted between the bottom face of the trunk and the head for biasing the head to abut against the annular bulge. When the chamber becomes at or higher a predetermined internal pressure, the piston lowers so that the vent holes are opened in the inner side wall of the trunk.

Here, the shape of the trunk includes a hollow conical shape, a drum shape, a prism shape (e.g., a square pole, a triangle pole or the like), an elliptical shape, or a hollow semicircle, conical or polygonal cone shape. The most preferable one is the drum shape.

In another airbag device of the invention, the back chamber preferably includes a chamber case fixed on the flange of the inflator and having at least one opening/closing aperture in its side wall or its bottom face or its wall face, and the gas flow rate changing device includes an actuator having a shutter mechanism for changing the open area of the opening/closing aperture. The shape of the chamber case includes a hollow conical shape, a prism shape (e.g., a square pole, a triangle pole or the like), an elliptical shape, or a semicircle shape.

Here, the inflator bracket is preferably formed: into a cross shape, and is equipped at each of four end portions or four corners with a first hole to be fixed on the flange of the inflator, and a second hole to be fixed on the trunk; into a ring shape, and is equipped at each of four end portions or four corners with a first hole to be fixed on the flange of the inflator, and a second hole to be fixed on the trunk; or a square shape having round holes of a diameter substantially equal to that of the inflator, and is equipped at each of four end portions or four corners with a first hole to be fixed on the flange of the inflator.

Moreover, the flange portion of the trunk preferably includes: second holes for fixing the inflator bracket; and third holes for fixing the airbag through a ring. The inflator bracket preferably has a fourth hole formed at the intersecting portion of its cross with a fourth hole for inserting a squib connector to send an ignition signal to the inflator.

With the construction of the airbag device thus far described, the internal pressure at the beginning of the airbag expansion is raised to improve the constraining force, and the vent holes are opened, when the chamber exceeds the predetermined internal pressure, so that the airbag can be given the optimum hardness for the passenger.

So that the invention may be more readily understood and so that further features thereof may be appreciated, embodiments of the invention will now be described, by way of example, with reference to the accompanying drawings, in which :
Fig. 1 is an exploded perspective view showing a major portion of an airbag device according to an embodiment of the invention;
Fig. 2 is a top plan view of Fig. 1;
Fig. 3 is a sectional front elevation of Fig. 1;
Fig. 4 is a perspective view showing another embodiment of an inflator bracket;
Fig. 5 is a perspective view showing a major portion of an airbag still another embodiment of the inflator bracket;
Fig. 6 is a sectional view showing still another embodiment of a back chamber and a gas flow rate changing device;
Fig. 7 is an explanatory view of a shutter mechanism; and
Figs. 8A, 8B and 8C are explanatory views showing other embodiments of the shutter mechanisms.

### DETAILED DESCRIPTION OF THE INVENTION

Embodiments of the present invention will be described in detail with reference to the accompanying drawings.

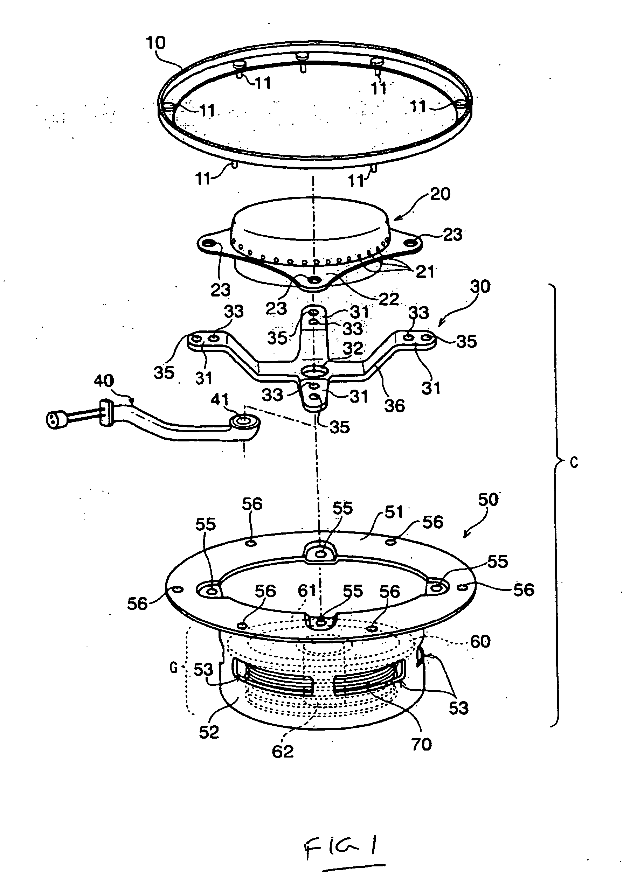

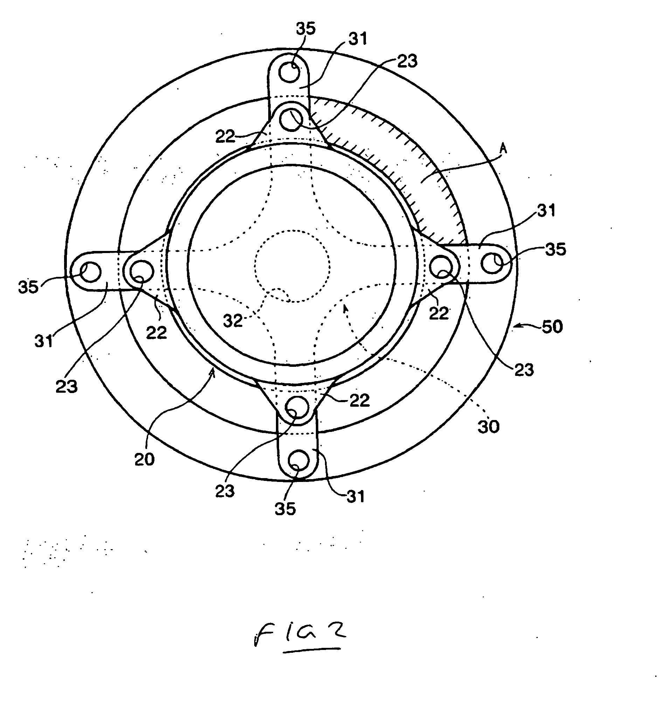

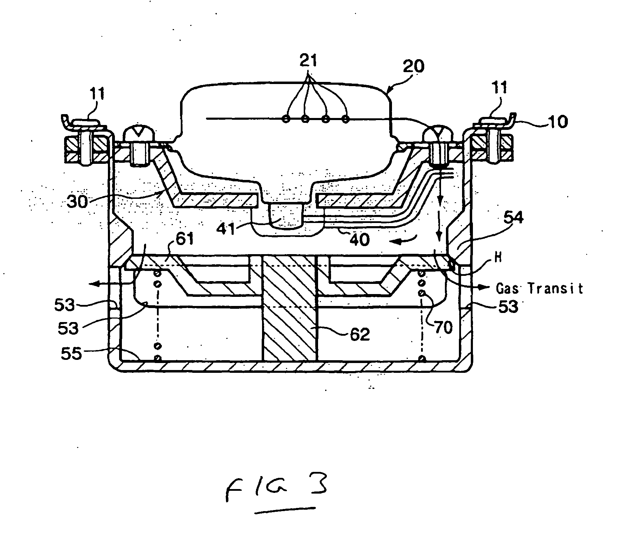

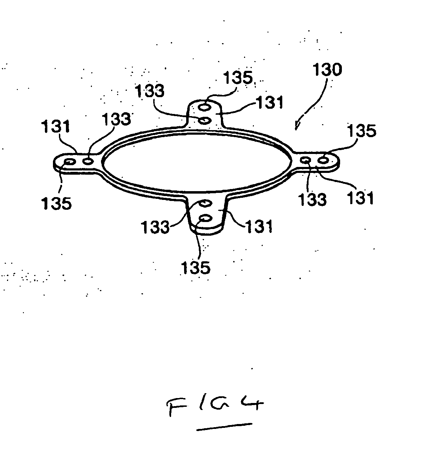

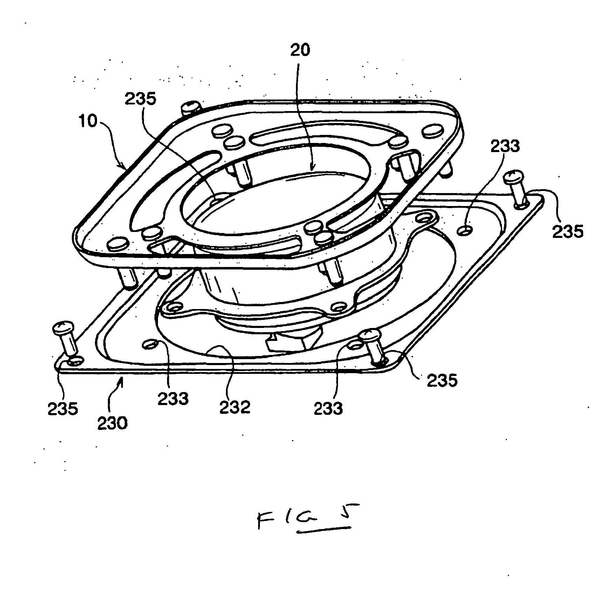

Fig. 1 is an exploded perspective view showing a major portion of an airbag device according to the embodiment of the invention; Fig. 2 is a top plan view of Fig. 1; Fig. 3 is a sectional front elevation of Fig. 1; Fig. 4 is a perspective view showing another embodiment of an inflator bracket; and Fig. 5 is a perspective view showing a major portion of an airbag including still another embodiment of the inflator bracket.

In Fig. 1 to Fig. 3, numeral 20 designates an inflator, which is provided with a plurality of gas blowout ports 21 in the circumference of its side wall. An airbag device controls the internal pressure of an airbag being expanded by the gas generated from the inflator 20, by changing the flow rate of the gas to pass through the later-described vent holes. Moreover, the airbag device is provided with a back chamber, which has the vent holes and which is disposed on the back of the inflator 20, and a gas flowing rate changing device G for changing the flow rate of the gas to flow through the vent holes.

The back chamber C is provided with an inflator bracket 30, which is fixed on a flange 22 of the inflator 20 for causing the gas generated from the gas blowout ports 21 to flow around to the back side of the inflator 20, and a drum-shaped trunk 50, which has a flange portion 51 fixed on the inflator bracket 30 and which is equipped in its side wall 52 with a plurality of gas exhaust ports 53.

The gas flow rate changing device G is equipped with: an annular bulge 54 formed on the inner side wall of the drum-shaped trunk 50; a piston having its head 61 pushed onto the annular bulge 54; and a spring 70, which is inserted around a piston shaft 62 between the bottom face 55 of the drum-shaped trunk 50 and the head 61 for biasing the head 61 to abut against the annular bulge 54.

When the back chamber C exceeds a predetermined internal pressure, the piston 60 lowers so that vent holes H are opened in the annular bulge 54 of the inner side wall of the drum-shaped trunk 50 to discharge the gas from the gas exhaust ports 53.

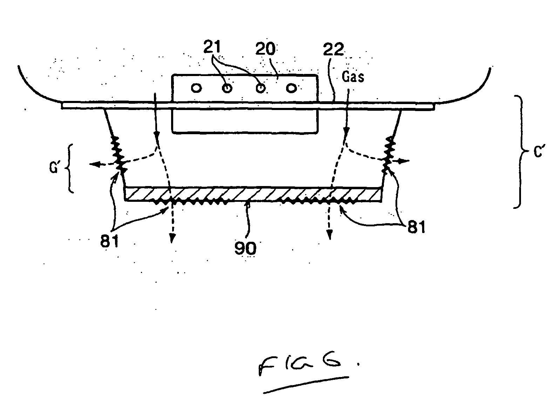

As shown in Fig. 6, a back chamber C' may be constructed of a chamber case 80, which is fixed on the flange 22 of the inflator 20 and which is equipped with one or more opening/closing apertures 81 in its side wall or bottom face. The gas flow rate changing device G may be constructed of an actuator 90, which is equipped with a shutter mechanism for changing the open area of the opening/closing apertures 81.

In this case, it is necessary that the opening/closing apertures 81 be opened by a stroke as short as possible (i.e. , an extremely short stroke such as 2 µsec. to 3 msec.) and have an open area as wide as possible.

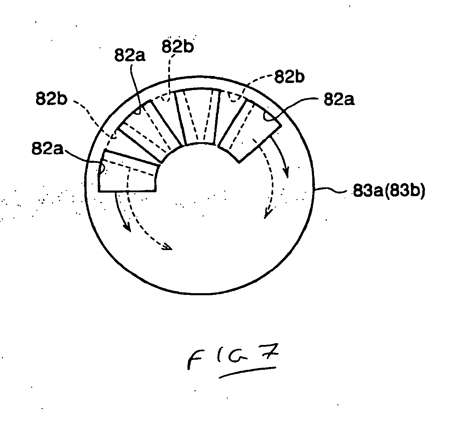

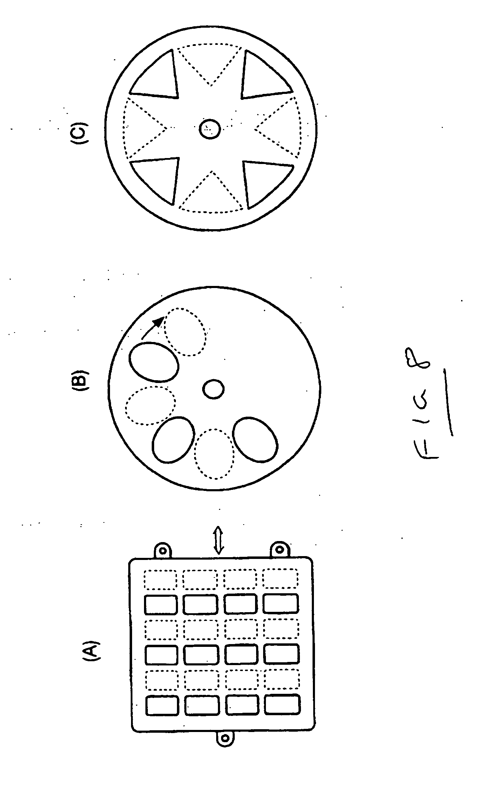

An example of the shutter mechanism is preferably constructed to have its open area changed by rotating two discs 83a and 83b having a plurality of slits 82a and 82b, as shown in Fig. 7, with a displacement. As shown in Fig. 8A, two plates having a plurality of slits may also be transversely moved with a shift to change their open area. Alternatively, the slits may be formed into an elliptical or arcuate shape, as shown in Figs. 8B and 8C.

In the embodiments of Fig. 1 and Fig. 6, the back chamber is only one but should not exclude the plurality. Moreover, the actuator should not be limited to the shutter type but may be constructed by combining the shutter type and a piston type, and should not exclude the plurality. On the other hand, the actuator can adopt the so-called "autoclave" for releasing the steam.

Here, the description reverts to the embodiment of Fig. 1. The aforementioned inflator bracket 30 is formed into a cross shape having four end portions 31, each of which is equipped with a first hole 33 to be fixed on the first hole 23 of the flange 22 of the inflator 20 and a second hole to be fixed on the drum-shaped trunk 50.

As shown in Fig. 4, there may be adopted another embodiment, in which an inflator bracket 130 is formed into a ring shape equipped with four end portions 131. Each end portion 131 is equipped with a first hole 133 to be fixed on the flange 22 of the inflator 20 and a second hole 135 to be fixed on the drum-shaped trunk 50.

As shown in Fig. 5, there may also be adopted still another embodiment, in which an inflator bracket 230 is formed into a square shape equipped with round holes 232 having a diameter substantially equal to that of the aforementioned inflator. The square inflator bracket 230 is equipped at each of its four corners with a first hole 233 to be fixed on the flange 22 of the inflator 20 and a second hole 235 to be fixed on the drum-shaped trunk 50. In any event, it is necessary that the inflator bracket is shaped to retain an area A (as referred to Fig. 2) for the gas to pass sufficiently between the inflator and the drum-shaped trunk.

In Fig. 1 to Fig. 3, the flange portion 51 of the drum-shaped trunk 50 is equipped with second holes 55 for fixing the inflator bracket 30 and third holes 56 for fixing the (not-shown) airbag with stud bolts 11 through a ring 10.

The inflator bracket 30 is equipped at the intersecting portion of its cross with a fourth hole 32 for inserting a squib connector 41 to send an ignition signal to the inflator 20. A harness assembly 40 is wired along an arm portion 36 of the inflator bracket 30.

Although the present invention has been described on its embodiments, it should not be limited thereto but can be modified according to the technical concept of Claims.

When used in this specification and claims, the terms "comprises" and "comprising" and variations thereof mean that the specified features, steps or integers are included. The terms are not to be interpreted to exclude the presence of other features, steps or components.

## Claims

1. An airbag device comprising an inflator (20) having gas blowout ports (21) in a side wall, for controlling an airbag internal pressure being expanded with the gas generated from said inflator, by changing the flow rate of the gas to pass through gas exhaust ports, **characterised by**:
a back chamber (C) disposed on the back of said inflator; gas exhaust ports (53), formed in said back chamber; and
a gas flow rate changing device (G) for changing the gas flow rate through said gas exhaust ports.

2. An airbag device according to claim 1,
wherein said back chamber includes:
an inflator bracket (30) fixed on the flange (22) of said inflator for causing the gas generated from said gas blowout ports to flow around to the back side of said inflator; and
a trunk (50) having a flange portion (51) fixed on said inflator bracket and having at least one gas exhaust port (53) in its side wall, and
wherein said gas flow rate changing device includes:
an annular bulge (54) formed along the inner side wall of said trunk;
a piston having its head (61) pushed onto said annular bulge; and
a spring (70) inserted between the bottom face of said trunk and said head for biasing said head to abut against said annular bulge,
whereby when said chamber exceeds a predetermined internal pressure, said piston lowers so that the gas exhaust ports are opened in the inner side wall of said trunk.

3. An airbag device according to claim 1,
wherein said back chamber includes a chamber case (80) fixed on the flange (22) of said inflator (20) and having at least one opening/closing aperture (81) in its side wall or its bottom face or its wall face, and
wherein said gas flow rate changing device (G) includes an actuator (90) having a shutter mechanism for changing the open area of said opening/closing aperture.

4. An airbag device according to claim 2,
wherein said inflator bracket (30) is formed into a cross shape, a ring shape, or a square shape having round holes of a diameter substantially equal to that of said inflator, and is equipped at each of four end portions (31) or four corners with a first hole to be fixed on the flange of said inflator, and a second hole to be fixed on said trunk.

5. An airbag device according to claim 2 or 3,
wherein the flange portion of said trunk includes:
second holes 35 for fixing said inflator bracket; and third holes (56) for fixing said airbag through a ring.

6. An airbag device according to claim 4,
wherein said inflator bracket has a fourth hole formed at the intersecting portion of its cross with a fourth hole for inserting a squib connector (41) to send an ignition signal to said inflator.

## Patentansprüche

1. Airbagvorrichtung umfassend einen Inflator (20) mit Gasausblasöffnungen (21) in einer Seitenwand zur Steuerung des innendrucks eines Airbags; der mit dem von dem lnflator erzeugten Gas aufgeblasen wird, indem die Durchflussrate des durch Gasauslassöffnungen ausströmenden Gases verändert wird, **gekennzeichnet durch**:
eine hintere Kammer (C) an der Rückseite des Inflators,
in der hinteren Kammer gebildete Gasauslassöffnungen (53), und
eine Vorrichtung (G) zur Änderung der Gasdurchflussrate, um die Gasdurchflussrate **durch** die Gasauslassöffnungen zu ändern.

2. Airbagvorrichtung nach Anspruch 1.
bei welcher die hintere Kammer aufweist:
eine an dem Flansch (22) des inflators angebrachte Inflatorschelle (30), um das aus den Gasausblasöffnungen austretende Gas auf der Rückseite des inflators entlang strömen zu lassen, und
einem Schaft (50) mit einem an der Inflatorschelle angebrachten Flanschabschnitt (51) und mit mindestens einer Gasauslassöffnung (53) in seiner Seitenwand, und
bei welcher die Vorrichtung zur Änderung der Gasdurchflussrate aufweist:
einen ringförmigen, entlang der inneren Seitenwand des Schaftes gebildeten Vorsprung (54); einen Kolben, dessen Kopf (61) auf den ringförmigen Vorsprung gedrückt ist, und
eine zwischen der Unterseite des Schaftes und dem Kopf eingesetzte Feder (70), um den Kopf vorzuspannen, so dass er gegen den ringförmigen Vorsprung stößt,
wobei sich der Kolben senkt, wenn die Kammer einen vorbestimmten Innendruck übersteigt, so dass die Gasauslassöffnungen an der inneren Seitenwand des Schaftes geöffnet werden.

3. Airbagvorrichtung nach Anspruch 1,
bei welcher die hintere Kammer ein Kammergehäuse (80) aufweist, das an
dem Flansch (22) des Inflators (20) angebracht ist und mindestens eine Öffnen-/Schließen-Öffnung (81) in seiner Seitenwand oder seiner Unterseite oder seiner Wandseite aufweist, und
bei welcher die Vorrichtung (G) zur Änderung der Gasdurchflussrate einen Aktuator (90) mit einem Schließmechanismus aufweist, um die offene Fläche der Öffnen-/Schließen-Öffnung zu verändern.

4. Airbagvorrichtung nach Anspruch 2,
bei welcher die Inflatorschelle (30) in Kreuz-, Ring- oder Rechteckform gebildet ist, mit tunden Löchern mit einem Durchmesser, der im Wesentlichen gleich, dem des inflators ist, und an allen vier Endabschnitten (31) oder vier Ecken mit einem ersten Loch zum Anbringen des inflators an dem Flansch und mit einem zweiten Loch zum Anbringen an dem Schaft ausgestattet ist.

5. Airbagvorrichtung nach Anspruch 2 oder 3,
bei welcher der Flanschabschnitt des Schaftes aufweist zweite Löcher (35) zum Anbringen der Inflatorschelle und dritte Löcher (56) zum Anbringen des Airbags mittels eines Ringes.

6. Airbagvorrichtung nach Anspruch 4,
bei welcher die Inflatorschelle ein viertes Loch auf dem sich kreuzenden Abschnitt seines Kreuzes aufweist, mit einem vierten Loch zum Einführen eines Zundverbinders (41), um ein Zündsignal an den Inflator zu senden.

## Revendications

1. Dispositif d'airbag comprenant un dispositif de gonflage (20) ayant des orifices d'éjection de gaz (21) dans une paroi latérale, pour contrôler une pression interne d'airbag devant se gonfler avec le gaz généré par ledit dispositif de gonflage, en modifiant le débit du gaz devant passer à travers les orifices d'échappement de gaz, **caractérisé par** :
■ une chambre antérieure (L) disposée à l'arrière dudit dispositif de gonflage ;
■ des orifices d'échappement de gaz (53) formés dans ladite chambre antérieure ; et
■ un dispositif de modification du débit de gaz (G) apte à modifier le débit de gaz à travers lesdits orifices d'échappement de gaz.

2. Dispositif d'airbag selon la revendication 1, dans lequel ladite chambre antérieure comprend :
■ un support de dispositif de gonflage (30) fixé sur le rebord (22) dudit dispositif de gonflage pour entraîner l'évacuation du gaz généré à partir desdits orifices d'éjection de gaz autour du côté arrière dudit dispositif de gonflage; et
■ un tronc (50) ayant une partie de rebord (51) fixée sur ledit support du dispositif de gonflage et ayant au moins un orifice d'échappement de gaz (53) dans sa paroi latérale, et
dans lequel ledit dispositif de modification du débit de gaz comprend :
■ un renflement annulaire (54) formé le long de la paroi latérale interne dudit tronc;
■ un piston ayant sa tête (61) poussée sur ledit renflement annulaire; et
■ un ressort (70) inséré entre la face inférieure dudit tronc et ladite tête pour dévier ladite tête afin qu'elle vienne en butée contre ledit renflement annulaire,
moyennant quoi, lorsque ladite chambre excède une pression interne prédéterminée, ledit piston s'abaisse de sorte que les orifices d'échappement de gaz s'ouvrent dans la paroi latérale interne dudit tronc.

3. Dispositif d'airbag selon la revendication 1,
■ dans lequel ladite chambre antérieure comprend un logement de chambre (80) fixé sur le rebord (22) dudit dispositif de gonflage (20), et ayant au moins une ouverture s'ouvrant/se refermant (81) dans sa paroi latérale ou sa surface inférieure ou sa surface latérale, et
■ dans lequel ledit dispositif de modification de débit de gaz (G) comprend un actionneur (90) doté d'un mécanisme obturateur pour modifier la région d'ouverture de ladite ouverture s'ouvrant/se refermant.

4. Dispositif d'airbag selon la revendication 2, dans lequel ledit support de dispositif de gonflage (30) est formé selon une forme transversale, une forme annulaire, ou une forme carrée, ayant des orifices arrondis d'un diamètre sensiblement égal à celui dudit dispositif de gonflage, et doté à chacune des quatre parties d'extrémité (31) ou quatre coins d'un premier orifice devant être fixé sur le rebord dudit dispositif de gonflage, et un second orifice devant être fixé sur ledit tronc.

5. Dispositif d'airbag selon la revendication 2 ou 3, dans lequel la partie de rebord dudit tronc comprend :
■ des deuxièmes orifices (35) pour fixer ledit support de dispositif de gonflage ; et
■des troisièmes orifices (56), pour fixer ledit airbag à travers un anneau.

6. Dispositif d'airbag selon la revendication 4, dans lequel ledit support de dispositif de gonflage comprend un quatrième orifice formé au niveau de la partie d'intersection de son croisement avec un quatrième orifice pour insérer un connecteur à amorce (41) afin d'envoyer un signal d'allumage audit dispositif de gonflage.
